Europäisches Patentamt

European Patent Office

Office européen des brevets

(19)

(11) Veröffentlichungsnummer: **0 163 890**
**A1**

## (12) EUROPÄISCHE PATENTANMELDUNG

(21) Anmeldenummer: 85104835.5

(22) Anmeldetag: 21.04.85

(51) Int. Cl.⁴: **A 23 G 1/12,** A 23 G 1/04, B 02 C 23/02

(30) Priorität: 10.05.84 IT 2086284

(43) Veröffentlichungstag der Anmeldung: 11.12.85 Patentblatt 85/50

(84) Benannte Vertragsstaaten: AT BE CH DE FR GB IT LI LU NL SE

(71) Anmelder: CARLE & MONTANARI S.p.A., Via Neera 39, I-20141 Milano (IT)

(72) Erfinder: Ripani, Sergio, Viale G. Da Cermenate 35/A, I-20141 Milano (IT)
Erfinder: Serafini, Giulio, Via Montemartini 6, I-20139 Milano (IT)

(74) Vertreter: de Dominicis, Riccardo et al, de Dominicis & Partners S.a.s. Via Brera, 6, I-20121 Milano (IT)

(54) Speise- und Pruefungsanlage der Speiseschokolade in Schokoladenwalzenreibmaschinen.

(57) Speise- und Prüfungsanlage der Speiseschokolade in Schokoladenwalzenreibmaschinen, enthaltend Entnahmeplatten (10) zur Entnahme der Schokolade aus einem Schokoladenförderer (9) und zur Beschickung derselben in mehreren Stellen des Schokoladentrichters (11), eine mit den Tragbalken (12) des Schololadentrichters (11) zusammenarbeitende elektrische Lastzelle (15), sowie Mittel (7) zur mechanischen Ermittlung des Minimum- und Maximumpegels der Schokolade in der Schokoladenaufnahmekammer (8) der Zufuhrwalzen (1, 2), sowie Mittel zur Anzeige des Gewichts (34) der gespeisten Schokolade, der tatsächlichen Beladungszeit (35) und der tatsächlichen Leistung (37) der Schokoladenwalzenreibmaschine sowie, vorzugsweise, ebenfalls der Feinheit (38) des ausgetragenen Schokoladenfilms.

0163890

Carle & Montanari S.p.A.
Via Neera 39
20141 Milano / Italien

Speise- und Pruefungsanlage der Speiseschokolade in Schokoladen-walzenreibmaschinen

Vorliegende Erfindung bezieht sich auf eine Speise- und Pruefungsanlage der Speiseschokolade in Schokoladenwalzenreibmaschinen.

Wie an sich bekannt, haben bei den Schokoladenwalzenreibmaschinen die Raffinierwalzen die Aufgabe, den denselben zugefuehrten Schokoladenteig zu "walzen" bzw. raffinieren, um dem verarbeiteten und ausgetragenen Schokoladenfilm den jeweils gewuenschten Feinheitsgrad zu verleihen.

Der Feinheitsgrad wird in Abhaengigkeit der spaeteren Verwendung der raffinierten Schokolade, d. h. von den jeweiligen Schokoladenerzeugnissen gewaehlt.

Die Messung des Feinheitsgrades des von den Schokoladenwalzenreibmaschinen ausgetragenen Schokoladenfilms ist sehr schwierig und wird im allgemeinen auf empirische Weise durchgefuehrt.

In der italienischen Patentanmeldung Nr. 20 718 A/83 der Anmelderin wurde eine Vorrichtung zur Regelung und Ueberwachung der von Schokoladenwalzenreibmaschinen ausgetragenen Schokoladenfilmdicke offenbart, die die Erzielung der jeweils gewuenschten bzw. eingestellten Feinheitswerte ermoeglicht. Mit der beschriebenen Vorrichtung ist es moeglich, Regeleingriffe in der Schokoladenwalzenreibmaschine direkt zu taetigen, um die eingestellten Feinheitswerte einzuhalten.

Bei den ueblichen Schokoladenwalzenreibmaschinen wird einerseits die Pruefung des Feinheitswertes auf eine empirische und unsichere Weise durchgefuehrt und andererseits ist bei denselben keine Pruefungsmoeglichkeit der tatsaechlichen Leistung der Walzenreibmaschine gegeben.

Bei den bekannten Schokoladenwalzenreibmaschinen erfolgt ferner die Beschickung bzw. Speisung des Schokoladenteigs aus dem Schokoladenfoerderer durch eine einzige schwenkbare messerartige Ablenkplatte, so dass die Speisung der Schokolade in den Schokoladentrichter an einer einzigen Stelle in der Mitte des Trichters erfolgt. Dies bildet jedoch eine dachartige Gestaltung der oberen Schokoladenmasse im Trichter, d. h. ueber die Trichterlaenge liegen staendig verschiedene Schokoladenhoehen vor, was sich in die Fuellung der zwischen den Zufuhrwalzen gebildeten Schokoladenaufnahmekammern nachteilig wiederspiegelt und eine unregelmaessige Fuellung dieser Schokoladenaufnahmekammer verursacht.

Darueber hinaus ist in der Schokoladenaufnahmekammer der bekannten Schokoladenwalzenreibmaschinen eine kapazitive Sonde zur Ermittlung des Minimum- und Maximumpegels der Schokolade vorgesehen. Es ist ebenfalls bekannt, dass aufgrund der sich auf diese Sonden absetzenden Schokoladenablagerungen die Arbeitsweise dieser kapazitiven Sonden unregelmaessig und unzuverlaessig ist. Dies bedingt nicht immer prompte Fuellungsvorgaenge der Schokolade in den Trichter, so dass es bei zu niedrigen Schokoladenminimumpegeln vorkommen kann, dass bei der zweiten Zufuhrwalze die bekannten "Hohlraeume" entstehen, die zu den gefuerchteten "trockenen Bereichen bzw. Baendern" und jedenfalls zu Dickenunregelmaessigkeiten des sich in Verarbeitung befindenden Schokoladenfilmes fuehren koennen.

Der vorliegenden Erfindung liegt die Aufgabe zugrunde, eine Speise- und Pruefungsanlage der Speiseschokolade in Schokoladenwalzenreibmaschinen zu schaffen, die in der Lage ist, die oben erwaehnten Nachteile zu vermeiden bzw. eine regelmaessige Fuellung des Schokoladentrichters und eine sichere Ermittlung der Schokoladenminimum- und -maximumpegel in die Schokoladenaufnahmekammer der Walzenreibmaschine zu gewaehrleisten, sowie die tatsaechliche Leistung der Walzenreibmaschine fuer die gewuenschte Zeitspanne und den tatsaechlichen Feinheitswert des ausgetragenen Schokoladenfilms anzugeben.

Ausgehend von einer Speise- und Pruefungsanlage der Speise- schokolade in Schokoladenwalzenreibmaschinen, enthaltend: Ent- nahmemittel zur Entnahme der Schokolade aus dem Schokoladenspeisefoerderer, einen Speisetrichter, Mittel zur Anzeige des Minimum- und Maximumpegels im Speisetrichter, sowie Mittel zur Ermittlung der Schokoladenmenge in der Schokoladenaufnahmekammer der Zufuhrwalzen der Schokoladenwalzenreibmaschine, wird die der vorliegenden Erfindung zugrunde gelegte Aufgabe mit einer Speise- und Pruefungsanlage geloest, die dadurch gekennzeichnet ist, dass:

i. die Entnahmemittel zur Entnahme der Schokolade faehig sind, eine gleichmaessige Fuellung des Schokoladentrichters zu bewirken,

ii. dem Schokoladentrichter ist eine elektrische Lastzelle zugeordnet,

iii. die die Minimum- bzw. Maximumpegelwerte der Schokolade in der Schokoladenaufnahmekammer der Zufuhrwalzen ermittelnden Mittel als eine schwenkbare Vorderwand der Schokoladenaufnahmekammer ausgebildet sind, und

iv. eine Anzeigevorrichtung vorgesehen ist, die ein Display zur Anzeige der in den Trichter gespeisten Schokoladenmenge, ein Display zur Anzeige der tatsaechlichen jeweils in Betracht gezogenen Speisezeit, sowie einen Rechner zur Verarbeitung der Werte bezueglich der Menge der gespeisten Schokolade und der Speisezeit sowie von gespeicherten Werten, die eine bestimmte Konstante darstellen, die von der Laenge der Raffinierwalzen, von der Geschwindigkeit der Raffinierwalzen und von baulichen Parametern der jeweiligen Schokoladenwalzenreibmaschine abhaengig ist, enthaelt, um direkt neben der Leistung der Walzenreibmaschine auch die tatsaechliche Feinheit des ausgetragenen Schokoladenfilmes darzustellen.

Weitere Merkmale der erfindungsgemaessen Speise- und Pruefungsanlage sind den Unteranspruechen entnehmbar.

Mit der erfindungsgemaessen Speise- und Pruefungsanlage der Speiseschokolade sowie des ausgetragenen Schokoladenfilms ist es moeglich, einerseits die der Schokoladenwalzenreibmaschine zugefuehrte Schokoladenmenge tadellos zu regeln und andererseits ueber eine gleichzeitige Darstellung sowohl der tatsaechlich verarbeiteten Schokoladenmenge als auch des Feinheitswertes des ausgetragenen Schokoladenfilms zu verfuegen.

Ein weiterer Vorteil der vorgeschlagenen Speise- und Pruefungsanlage besteht in einer einfachen Herstellung sowohl der verschiedenen die Speisung der Schokolade ausfuehrenden Anlageteile, als auch der die Leistung und den Feinheitswert des ausgetragenen Schokoladenfilms darstellenden Datenverarbeitungsvorrichtung.

Die mit der erfindungsgemaessen Speise- und Pruefungsanlage versehenen Schokoladenwalzenreibmaschinen weisen deshalb eine gleichmaessigere und regelmaessigere Arbeitsweise auf und ermoeglichen eine direkte Ablesung ihrer tatsaechlichen Leistung sowie des Feinheitswertes des ausgetragenen Schokoladenfilmes.

Weitere strukturelle Einzelheiten, Merkmale und Vorteile der erfindungsgemaessen Speise- und Pruefungsanlage sind der nachfolgenden Beschreibung unter Bezugnahme auf die beigefuegten Zeichnungen entnehmbar, die vorgezogene Ausfuehrungsformen der verschiedenen Anlageteile beispielsweise und schematisch darstellen.

Es zeigen:

Fig. 1 eine schematische Prinzipgesamtdarstellung einer Schokoladenwalzenreibmaschine mit der erfindungsgemaessen Speise- und Pruefungsanlage;

Fig. 2 und 3 jeweils eine Teilseitenansicht, die das Zufuhrwalzenpaar mit dem Schokoladentrichter und der schwenkbaren Vorderwand der Schokoladenaufnahmekammer der Zufuhrwalzen darstellen, und zwar in Fig. 2 in einer Fuellungszwischenphase und in Fig. 3 nach erfolgter Fuellung;

Fig. 4, 5 und 6 zwei Draufsichten und eine Vorderansicht des Schokoladenfoerderers und des Schokoladentrichters in einer ersten Ausfuehrungsform der Schokoladenentnahmeplatten;

Fig. 7, 8 und 9 zwei aehnliche Draufsichten und eine Vorderansicht, die eine zweite Ausfuehrungsform der Schokoladenentnahmemittel aus dem Schokoladenfoerderer darstellen; und

Fig. 10, 11 und 12 eine Draufsicht, eine Vorderansicht und eine Seitenansicht einer dritten Ausfuehrungsform der Schokoladenentnahmemittel.

Bei den mit verschiedenen Massstaeben dargestellten Figuren weisen gleiche bzw. entsprechende Teile gleiche Bezugszeichen auf.

Die Schokoladenwalzenreibmaschine wird schematisch insgesamt mit A bezeichnet. Sie enthaelt ein Einzugs- bzw. Zufuhrwalzenpaar 1, 2, das aus einer ersten Walze 1 und einer zweiten Walze 2, welche ebenfalls eine Raffinierwirkung ausuebt, besteht. Mit 3, 4 und 5 werden die eigentlichen Raffinierwalzen bezeichnet, wobei die Walze 5 die Austragwalze ist. Im Bereich der Lagerungsenden der Zufuhrwalzen 1, 2 sind Seitenwaende 6 angeordnet, die zusammen mit der schwenkbaren Vorderwand 7 die Schokoladenaufnahmekammer 8 des Zufuhrwalzenpaars 1, 2 bildet. Die zu raffinierende Schokolade wird durch einen Foerderer 9 gefoerdert, der im allgemeinen der gleichzeitigen Beschickung mehrerer Schokoladenwalzenreibmaschinen dient.

Die Entnahme der gefoerderten Schokolade erfolgt durch insgesamt mit 10 bezeichneten Entnahmemittel. Aus dem Foerderer 9 wird die Schokolade in den Schokoladentrichter 11 gespeist, der in einem Endteil von zwei seitlichen Tragbalken 12 gelagert ist, die ihrerseits ungefaehr in der Mitte bei 13 in einem ortsfesten Traeger 14 gelagert sind. Der freie Endteil der genannten Tragbalken 12 arbeitet mit einer elektrischen an sich bekannten Lastzelle 15 zusammen. Die erfindungsgemaesse Datenverarbeitungsvorrichtung zur Anzeige der verarbeiteten Schokoladenmenge sowie der Feinheit des ausgetragenen Schokoladenfilmes ist mit 16 bezeichnet.

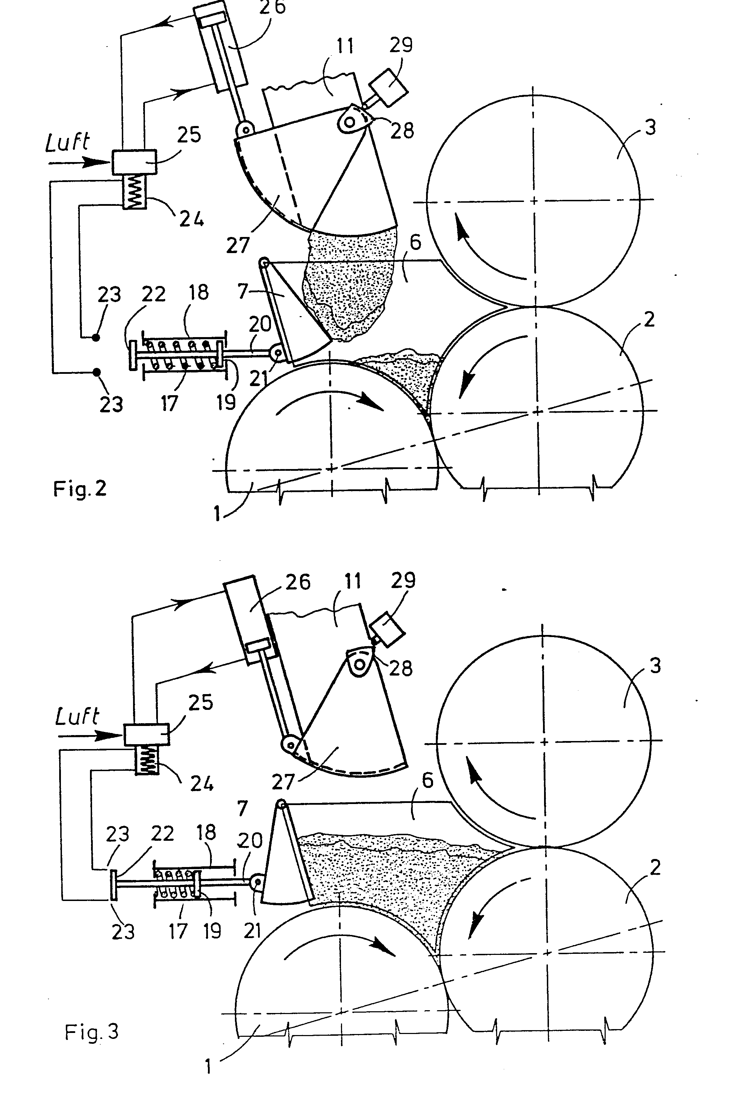

Wie aus Fig. 2 und 3 ersichtlich, muss die schwenkbare Vorderwand 7 der Schokoladenaufnahmekammer 8 in ihrer Oeffnungsbewegung die elastische Belastung der Druckfeder 17 ueberwinden, die in einem Gehaeuse 18 aufgenommen ist und mit einem scheibenfoermigen an der Verbindungsstange 20 angebrachten Anschlag 19 zusammenarbeitet. Die Verbindungsstange 20 ist an einem End bei 21 an der Vorderwand 7 angelenkt, geht durch das Federgehaeuse 18 hindurch und weist am entgegengesetzten freien Ende einen elektrischen Kontakt 22 auf. Dieser Kontakt 22 arbeitet mit den ortsfesten Kontakten 23 der Steuerwicklung eines Elektroventiles 24 eines pneumatischen Triebes 25 zur Oeffnungs- bzw. Schliesssteuerung einer pneumatischen doppeltwirkenden Steuereinheit 26 zusammen, die der Steuerung der Schwenkbewegung des den Boden des Trichters 11 bildenden Schildes 27 dient. Die Seitenwaende dieses Schildes fuehren eine Schwenkbewegung aus, die durch seitliche Nocken 28 bestimmt wird. Den Nocken 28 ist ein Mikroschalter 29 zugeordnet, der auf eine nicht naeher dargestellte Weise mit dem genannten Elektroventil 24 zur Steuerung der doppeltwirkenden Steuereinheit 26 verbunden ist.

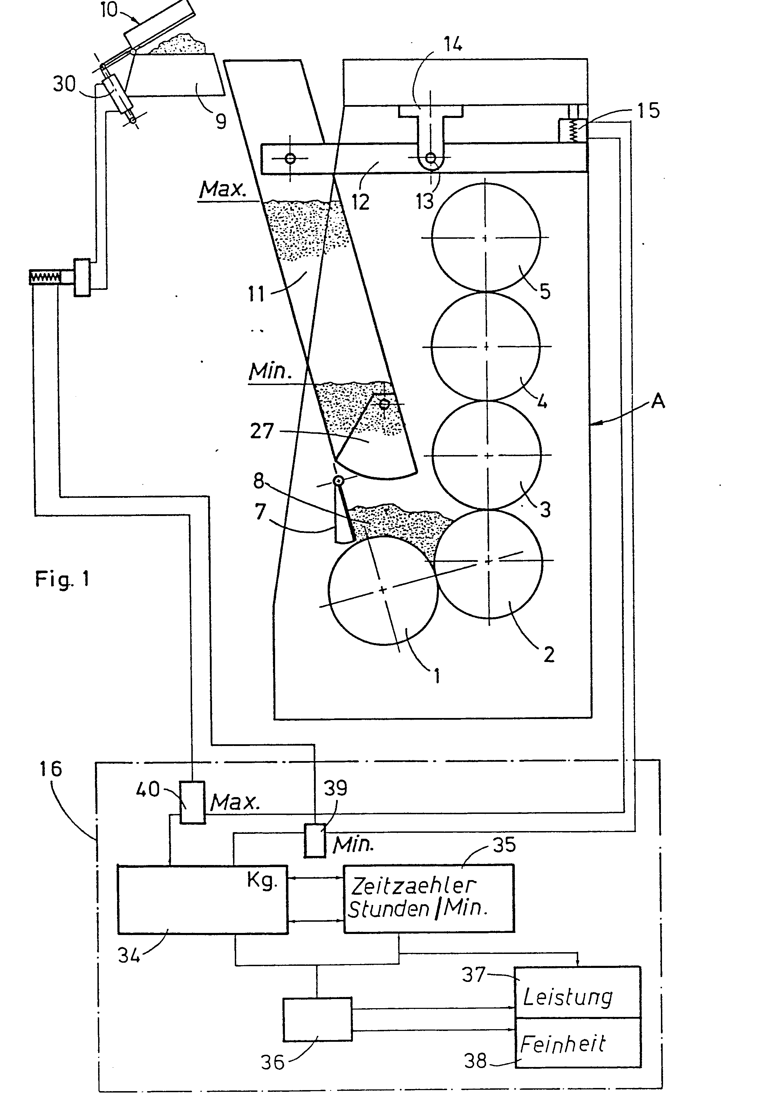

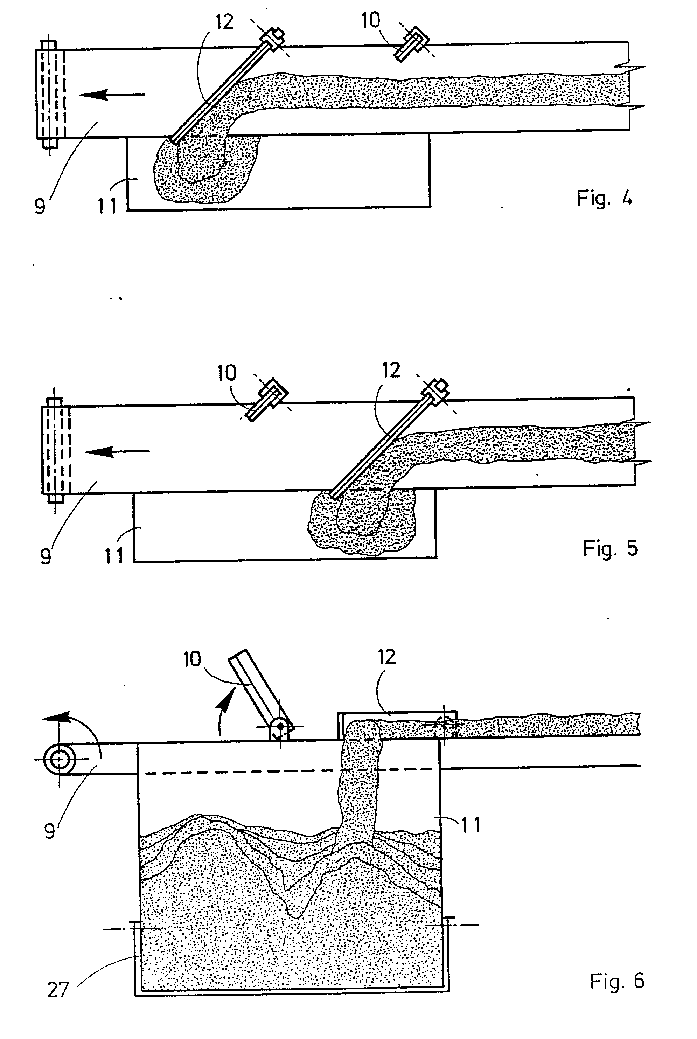

Unter Bezugnahme auf die Figuren 4 bis 12 werden nun die Mittel zur Beschickung der Schokolade beschrieben. Dieselben weisen die Gestaltung von messerartigen Elementen auf, die, wie in Fig. 1 dargestellt, an Tragteilen des Foerderers 9 gelagert und ueber eine Zylinder-Kolbeneinheit 30 schwenkbar sind. Bei den Figuren 4 bis 6 sind oberhalb des Foerderers 9 zwei Ablenkplatten 10 vorgesehen, die voneinander einen Abstand aufweisen, der ungefaehr der Haelfte der Trichterlaenge entspricht, wobei diese Ablenkplatten nacheinander betaetigt bzw. gehoben und abgesenkt werden, so dass der Trichter 11 abwechselnd zuerst in der einen Haelfte und dann in der anderen Haelfte beschickt wird.

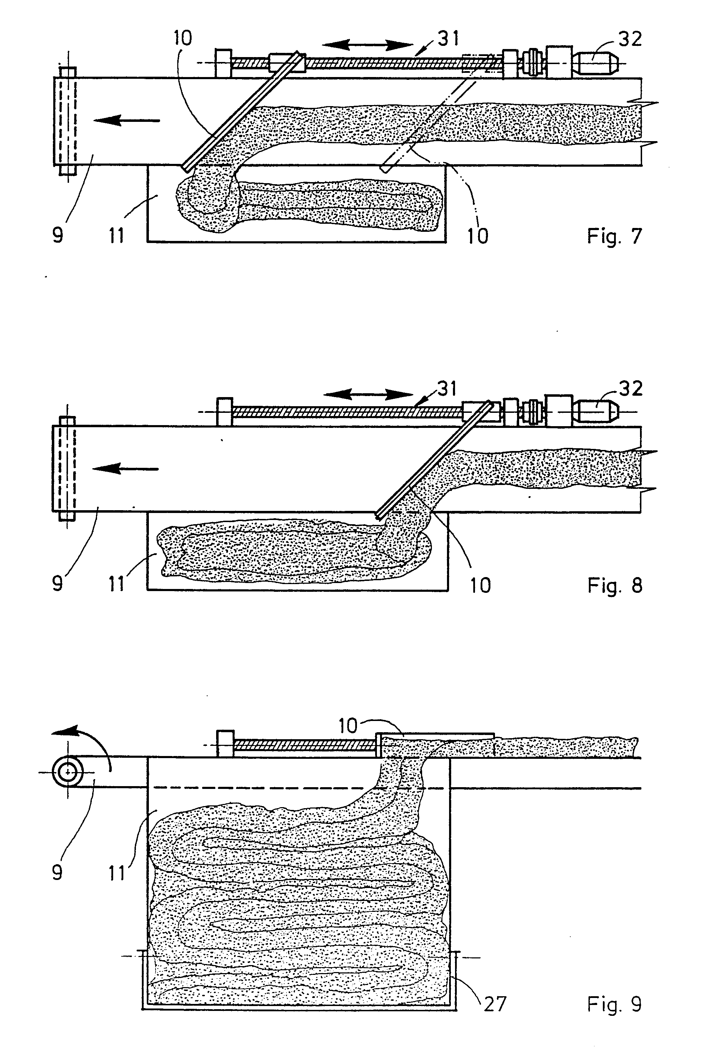

Bei den Figuren 7 bis 9 ist eine einzige Ablenkplatte 10 vorgesehen, die ueber einen mutterartigen Traeger auf einer von einem Umkehrmotor 32 angetriebenen Spindel 31 angebracht ist, wobei die Spindel 31 mit zwei nicht dargestellten Endschaltern zur Bestimmung der Hin- und Herbewegung der Ablenkplatte 10 versehen ist. Mit dieser Vorrichtung erfolgt die Beschickung des Trichters 11 schichtenweise.

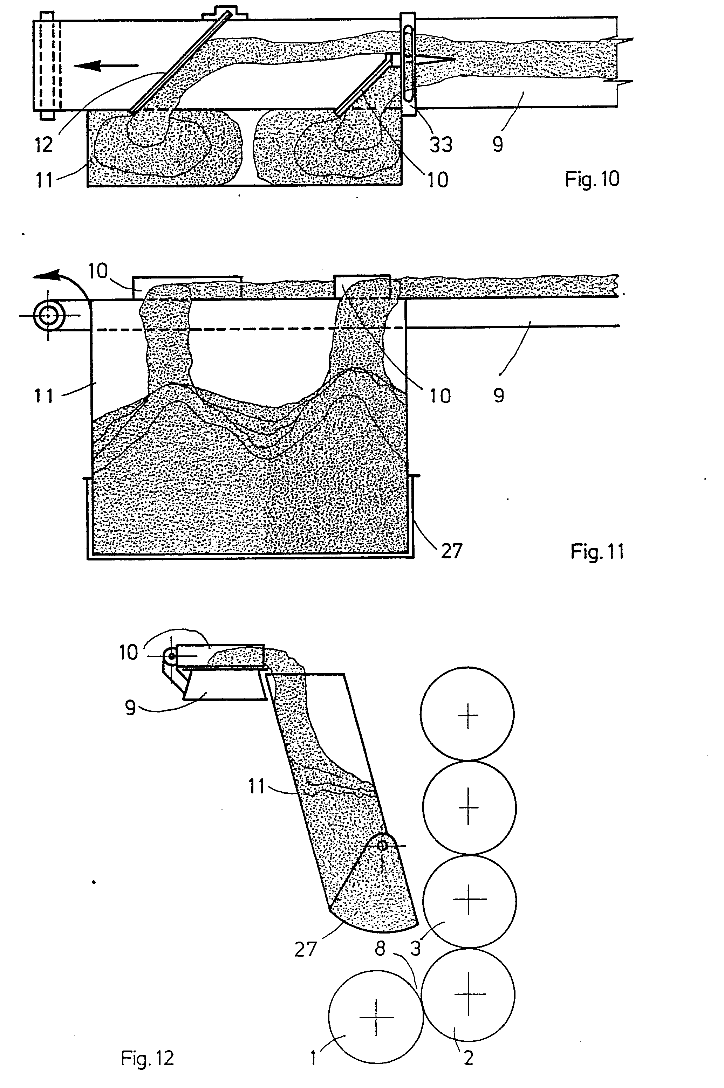

Bei der Ausfuehrungsform von Fig. 10 - 12, die eine aehnliche Fuellung mit der Ausfuehrungsform der Figuren 4 - 6 ermoeglicht, sind zwei schraege Ablenkplatten 10 vorgesehen, wobei die Laenge

0163890

der einen Ablenkplatte die ganze Breite des Foerderers 9 ueberbrueckt und die Laenge der anderen Ablenkplatte nur ungefaehr die Haelfte der Foerdererbreite betraegt.

Die kuerzere Ablenkplatte ist in einem Quertraeger 13 mit mittlerem Laengsschlitz gelagert, so dass es moeglich ist, die Arbeitslaenge dieser Ablenkplatte nach Belieben zu aendern. Auf diese Weise kann man nach Wunsch die Unterteilung der gespeisten Schokoladenmenge regeln. Die Schokoladenentnahme erfolgt gleichzeitig mit beiden Ablenkplatten 10.

Die Datenverarbeitungs- und -anzeigevorrichtung 16 enthaelt ein digitales Display 34 zur Anzeige des Trichterschokoladeninhaltes in Kg, einen Zeitzaehler 35 sowie einen Rechner 36, ein Display 37 zur Anzeige der Walzenreibmaschinenleistung und ein Display 38 zur Anzeige der Austragfilmfeinheit. Mit 39 und 40 sind jeweils ein Minimum-Trieb und ein Maximum-Trieb bezeichnet, die ueber ein Elektroventil und einen dazugehoerigen Trieb die doppeltwirkende Kolben-Zylindereinheit 30 zur Steuerung der Ablenkplatten 10 steuern.

Nachfolgend wird nun die Arbeitsweise der verschiedenen Teile der erfindungsgemaessen Speise- und Pruefungsanlage beschrieben. Die regelmaessige Beschickung bzw. Fuellung des Trichters 11 mit der Vorrichtung nach Fig. 4 - 6 erfolgt nach Einschwenkung der Entnahme- bzw. Ablenkplatten 10 ueber die Kolben-Zylindereinheit 30, die ihrerseits durch den Minimum-Trieb 39 gesteuert wird. Die Unterbrechung des Fuellungsvorganges ist durch Eingriff des Minimum-Triebs 40 bestimmt und erfolgt durch Ausschwenken der Entnahme- bzw. Ablenkplatten 10. Die Speisung der Schokolade vom Trichter 11 in die Schokoladenaufnahmekammer 8 der Zufuhrwalzen 1 und 2 wird jedesmal erfolgen, wenn die Schokolade in der Schokoladenaufnahmekammer 8 auf ihren Minimum-Pegel gelangt. Die Ermittlung dieses Minimum- Pegels erfolgt erfindungsgemaess auf mechanische Weise durch die schwenkbare Vorderwand

9 0163890

7. Die Vorderwand 7 ist durch die Spannfeder 17 dazu beansprucht, nach dem Inneren der Schokoladenaufnahmekammer 8 hinzuschwenken, wobei nachdem kein Widerstand mehr von der restlichen Schokolade in der Kammer 8 geleistet wird, wird die Schwenkbewegung der Vorderkammer 7 beendet. In dieser Einschwenklage nach innen der Vorderwand 7 ist der Kontakt 22 von den ortsfesten Kontakten 23 getrennt, was die Oeffnungsschwenkbewegung des Trichterschildes 27 ueber das Elektroventil 24, den Trieb 25 und die doppeltwirkende Einheit 26 bewirkt. Die sich im Trichter 11 befindliche Schokolade bewegt sich aus Schwerkraft nach unten und wenn dieselbe in die Schokoladenaufnahmekammer 8 gelangt, bewirkt dieselbe eine Ausschwenkbewegung der Vorderwand 7 nach aussen, was dann zur Schliessung der Kontakte 23 durch den Kontakt 22 fuehrt. Dies bewirkt das Schliessen des Schildes 27 und die Unterbrechung der Schokoladenspeisung in die Kammer 8. Die Oeffnungsweite des Schildes 27 ist durch die Nocken 28 und den Mikroschalter 29, der auf das Elektroventil 24 und deshalb auf die doppeltwirkende Einheit 26 wirkt, voreinstellbar. Solche Speisevorgaenge erfolgen deshalb unabhaengig von den bekannten und bis heute eingesetzten kapazitiven Ermittlungssonden.

Die Wirkungsweise der Entnahmeplatten 10 ist aus der Zeichnung an sich deutlich ersichtlich. Die vorgeschlagenen Loesungen ermoeglichen eine gleichmaessige Fuellung des Trichters 11 auch im Falle einer betraechtlichen Laenge des Trichters, was die beste Voraussetzung fuer eine gleichmaessige Fuellung der darunterstehenden Schokoladenaufnahmekammer 8 der Zufuhrwalzen 1, 2 auch bei erheblichen Arbeitslaengen der Raffinierwalzen, wie z. B. in der Groessenordnung von 2,5 m, darstellt.

Die Datenverarbeitungsvorrichtung 16 arbeitet wie folgt:
Die Lastzelle 15 sendet dem digitalen Gewichtsdisplay 34 einen elektrischen Strom, dessen Wert proportional zum Gewicht der Schokolade im Trichter 11 ist, wobei das Display 34 den gemessenen Gewichtswert anzeigt.

Das Zeitdisplay zaehlt die Beschickungszeit. Durch Multiplizieren des Schokoladengewichts mit der Beschickungszeit erhaelt man die Walzenreibmaschinenleistung fuer die in Betracht gezogene Zeitspanne. Dies ermoeglicht, auf die Verwendung von Bandwaagen bzw. aehnlichen Wiegeeinrichtungen, sowie auf voruebergehende Entnahmeproben, wie bis heute ueblich, zu verzichten, die einerseits nicht genau und andererseits nicht faehig sind, die Ermittlung der erheblichen Leistungen dieser Schokoladenwalzenreibmaschinen durchzufuehren.

Die Verwendung einer elektrischen Lastzelle, bei der die Moeglichkeit besteht, den Minimum-Wert und den Maximum-Wert als Schwellenwerte einzustellen, ermoeglicht ebenfalls die Entnahme bzw. Ablenkplatten 10 automatisch zu steuern, wobei somit die gleichmaessige Speisung der Schokolade in den Trichter 11 gewaehrleistet wird. Beim Eingreifen des Minimum-Triebs 39 wird der Zeitzaehler 35 gestoppt. Dadurch, dass man die Konstante K (die von der Laenge der Raffinierwalzen, der Geschwindigkeit der Raffinierwalzen und von baulichen Parametern der jeweiligen Schokoladenwalzenreibmaschine abhaengig ist) sowie die Walzenreibmaschinenleistung kennt, kann man die Walzenreibmaschinenleistung durch die Konstante K teilen und somit die Feinheit des ausgetragenen Schokoladenfilms erhalten. Solche Berechnungen werden durch den Rechner 36 durchgefuehrt und das Ergebnis, d. h. der Feinheitswert wird auf dem Display 38 angezeigt.

Es wird hervorgehoben, das die Wahl der Betaetigungszeiten der Ablenkplatten 10 zur Entnahme der Schokolade entweder von Hand, indem man Schaltuhren verwendet oder vorteilhafterweise auf eine automatische Weise, indem man die mit der elektrischen Lastzelle 15 und gegebenenfalls mit dem vorgesehenen Rechner 36 verbundene elektrische Schaltung einsetzt, realisiert werden kann.

11

Dem Obengesagten ist deutlich entnehmbar, dass mit der erfindungsgemaessen Speise- und Pruefungsanlage der Speiseschokolade in Schokoladenwalzenreibmaschinen die der vorliegenden Erfindung zugrunde gelegte Aufgabe wirksam geloest wird und die erwaehnten Vorteile erhalten werden. Insbesondere wird die Moeglichkeit gegeben, die Leistungs- und Feinheitswerte direkt zu ermitteln und gleichzeitig wird eine gleichmaessige und einwandfreie Arbeitsweise der mit der erfindungsgemaessen Speise- und Pruefungsanlage versehenen Walzenreibmaschine gewaehrleistet. Der erhaltene Schokoladenfilm weist die gewuenschte Feinheit auf eine gleichmaessige und regelmaessige Weise auf. Dies wird deshalb moeglich, weil man gleichzeitig und direkt auf die verschiedenen Vorrichtungen eingreift, die zur Foerderung der zu raffinierenden Schokolade vom Schokoladenfoerderer bis in die Schokoladeaufnahmekammer der Zufuhrwalzen beitragen, wobei einerseits diese Schokoladenfoerderung soweit wie moeglich gleichmaessig gestaltet wird und andererseits Messungsunregelmaessigkeiten, wie bei den bekannten kapazitiven Sonden unvermeidlich, vermieden werden.

Alle Einzelteile koennen durch andere technisch und/oder funktionell gleichwertige Teile ohne weiteres ersetzt werden, ohne dadurch den Schutzumfang vorliegender Erfindung zu verlassen.

Alle der Beschreibung, den Anspruechen und der Zeichnung entnehmbaren Merkmale sind sowohl einzeln als auch in beliebiger Kombination untereinander als erfindungswesentlich zu betrachten.

Carle & Montanari S.p.A.
Via Neera 39
20141 Milano / Italien

Patentansprueche

1. Speise- und Pruefungsanlage der Speiseschokolade in Schokoladenwalzenreibmaschinen, enthaltend Entnahmemittel zur Entnahme der Schokolade aus dem Schokoladenspeisefoerderer, einen Speisetrichter, Mittel zur Anzeige des Minimum- und Maximumpegels im Speisetrichter, sowie Mittel zur Ermittlung der Schokoladenmenge in der Schokoladenaufnahmekammer der Zufuhrwalzen der Schokoladenwalzenreibmaschine, dadurch gekennzeichnet, dass

i. die Entnahmemittel (10) zur Entnahme der Schokolade faehig sind, eine gleichmaessige Fuellung des Schokoladentrichters (11) zu bewirken,

ii. dem Schokoladentrichter (11) eine elektrische Lastzelle (15) zugeordnet ist,

iii. die die Minimum- bzw. Maximumpegelwerte der Schokolade in der Schokoladenaufnahmekammer (8) der Zufuhrwalzen (1, 2) ermittelnden Mittel (7) als eine schwenkbare Vorderwand (7) der Schokoladenaufnahmekammer (8) ausgebildet sind, und

iv. eine Anzeigevorrichtung (16) vorgesehen ist, die ein Display (34) zur Anzeige der in den Trichter (11) gespeisten Schokoladenmenge, ein Display (34) zur Anzeige der tatsaechlichen jeweils in Betracht gezogenen Speisezeit sowie einen Rechner (36) zur Verarbeitung der Werte bezueglich der Menge der gespeisten Schokolade und der Speisezeit sowie von gespeisten Werten, die eine bestimmte Konstante (K) darstellen, die von der Laenge der Raffinierwalzen, von der Geschwindigkeit der Raffinierwalzen und von baulichen Parametern der jeweiligen Schokoladenwalzenreibmaschine abhaengig ist, enthaelt, um direkt neben der Leistung (Q) der Walzenreibmaschine (Display 37) auch die tatsaechliche Feinheit (Display 38) des ausgetragenen Schokoladenfilms darzustellen.

2. Speise- und Pruefungsanlage nach Anspruch 1, dadurch gekennzeichnet, dass die Entnahmemittel zur Entnahme der Schokolade aus zwei schwenkbar gelagerten Entnahmeplatten (10) bestehen, die voneinander einen Abstand aufweisen, der ungefaehr der Haelfte der Trichterlaenge entspricht, wobei die genannten Entnahmeplatten (10) derart abwechselnd und fuer voreinstellbare Zeitperioden hochgeschwenkt bzw. betaetigt werden, dass eine abwechselnde Fuellung zuerst einer ersten Trichterhaelfte und danach der zweiten Trichterhaelfte usw. bewirkt wird.

3. Speise- und Pruefungsanlage nach Anspruch 1, dadurch gekennzeichnet, dass die Entnahmemittel zur Entnahme der Schokolade aus einer einzigen Entnahmeplatte (10) bestehen, die ueber ein mutterartiges Element auf einer parallel zur Laengsachse des Trichters (11) angeordneten, mit einem Umkehrmotor (32) verbunden und mit Endschaltern zur Bestimmung der Hin- und Herbewegungen der Entnahmeplatte (10) versehenen Spindel (31) angebracht ist, wobei die Fuellung des Trichters (11) schichtweise durch uebereinander angeordnete hin und her alternierend abgelegte Schichten erfolgt.

4. Speise- und Pruefungsanlage nach Anspruch 1, dadurch gekennzeichnet, dass die Entnahmemittel zur Entnahme der Schokolade aus zwei voneinander entfernten Entnahmeplatten (10) bestehen, von denen die entfernteste Entnahmeplatte (10) in Schokoladenzufuhrrichtung gesehen die ganze Breite des Schokoladenfoerderers (9) ueberbrueckt, waehrend die Laenge der anderen Entnahmeplatte (10) ungefaehr der Haelfte der Schokoladenfoerdererbreite entspricht, wobei die kurze Entnahmeplatte (10) vorzugsweise in einem einen mittleren Fuehrungsschlitz aufweisenden Quertraeger (3) einstellbar gelagert ist.

5. Speise- und Pruefungsanlage nach Anspruch 1, dadurch gekennzeichnet, dass mit den hinteren Enden der den Schokoladentrichter (11) tragenden Tragbalken (12) eine elektrische Lastzelle (15) zusammenwirkt, deren Ausgangsstrom, der das Gewicht der Schokolade im Schokoladentrichter (11) darstellt, einem digitalen Display (34) zur Anzeige des genannten Schokoladengewichtes im Trichter (11) zugeleitet wird.

6. Speise- und Pruefungsanlage nach Anspruch 1, dadurch gekennzeichnet, dass die Mittel zur Ermittlung der Minimum- und Maximumpegel der Schokolade in der Schokoladenkammer (8) der Zufuhrwalzen (1, 2) aus einer schwenkbar gelagerten Vorderwand (7) der Schokoladenkammer (8) bestehen, wobei die genannte Vorderkammer (7) von einer Spannfeder (17) zwischen einer inneren Einschwenkendlage, die dem Minimumpegel der Schokolade entspricht, und einer aeusseren Ausschwenkendlage, die dem Maximumpegel der Schokolade entspricht, belastet ist und wobei die genannten Einschwenkendlage und Ausschwenkendlage jeweils einer Oeffnungslage und Schliesslage eines elektrischen Schalters (22, 23) entsprechen, der ueber zwischengeschaltete Mitte (24, 25, 26) die Oeffnungs- bzw. die Schliessbewegung des Bodenschildes (27) des Schokoladentrichters (11) steuert.

7. Speise- und Pruefungsanlage nach Anspruch 1 und 6, dadurch gekennzeichnet, dass die Oeffnungs- bzw. Schliessmittel des Bodenschildes (27) des Schokoladentrichters (11) aus einer doppeltwirkenden Kolben-Zylindereinheit (26) bestehen.

8. Speise- und Pruefungsanlage nach Anspruch 1, dadurch gekennzeichnet, dass die zur Betaetigung der Entnahmeplatten (10) zur Entnahme der zu speisenden Schokolade verwendeten Signale des Minimum- und Maximumpegels aus dem elektrischen Strom abgeleitet werden, der von der elektrischen Lastzelle (15) zu dem Display (34) zur Anzeige des Gewichtes der gespeisten Schokolade geleitet wird.

Fig. 1

Max.

Min.

Max.

Min.

Kg.

Zeitzaehler
Stunden | Min.

Leistung

Feinheit

0163890

Fig. 2

Fig. 3

0163890

Fig. 4

Fig. 5

Fig. 6

0163890

Fig. 7

Fig. 8

Fig. 9

0163890

Fig. 10

Fig. 11

Fig. 12

| | **EINSCHLÄGIGE DOKUMENTE** | | EP 85104835.5 |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
| A | US - A - 3 618 865 (R.A. GRUNDLER et al.)<br><br>* Spalte 2, Zeile 61 - Spalte 4, Zeile 3; Fig. 1 *<br><br>-- | 1,6 | A 23 G 1/12<br>A 23 G 1/04<br>B 02 C 23/02 |
| A | DE - B - 1 164 815 (VEB MASCHINEN-FABRIK HEIDENAU)<br><br>* Spalte 2, Zeile 49 - Spalte 3, Zeile 30 *<br><br>-- | 1,6 | |
| P,A | EP - A2 - 0 123 015 (CARLE & MONTANARI S.P.A.)<br><br>---- | | |
| | | | **RECHERCHIERTE SACHGEBIETE (Int. Cl.4)**<br><br>A 23 G 1/00<br>B 02 C 23/00 |

Der vorliegende Recherchenbericht wurde für alle Patentansprüche erstellt.

| Recherchenort | Abschlußdatum der Recherche | Prüfer |
|---|---|---|
| WIEN | 13-08-1985 | IRMLER |